# EUROPEAN PATENT SPECIFICATION

(11) **EP 3 557 194 B1**
(45) Date of publication and mention of the grant of the patent: **01.04.2020**
(21) Application number: 18167807.9
(22) Date of filing: 17.04.2018
(51) Int. Cl.: G01F 1/60

(54) **FLOW-CALCULATING SCHEME OF ELECTROMAGNETIC FLOWMETER**
DURCHFLUSSBERECHNUNGSSCHEMA EINES ELEKTROMAGNETISCHEN DURCHFLUSSMESSERS
SCHÉMA DE CALCUL DE DÉBIT D'UN DÉBITMÈTRE ÉLECTROMAGNÉTIQUE

(43) Date of publication of application: 23.10.2019
(73) Proprietor: Finetek Co., Ltd., 236 New Taipei City (TW)
(72) Inventor: Chen, Chun-Ju, 236 New Taipei City (TW); Huang, Kun-Cheng, 236 New Taipei City (TW); Chen, Sheng-Shou, 236 New Taipei City (TW); Cheng, Chao-Kai, 236 New Taipei City (TW)
(74) Representative: 2K Patentanwälte Blasberg Kewitz & Reichel

(56) References cited:
- JP-A- S6 029 613
- JP-B2- 3 328 877
- US-A- 4 644 799
- US-A- 5 388 465
- US-A1- 2004 035 180
- C C Smyth: "Derivation of weight functions for the circular and rectangular channel magnetic flowmeters, by means of Green's theorem and conformal mapping", J. Phys. E: Sci. Instrum., vol. 4, 1 January 1971 (1971-01-01), pages 29-34, XP055596298,

## Description

### BACKGROUND OF THE INVENTION

### Field of the Invention

The present invention relates to a flow-calculating scheme, and especially relates to a flow-calculating scheme of an electromagnetic flowmeter.

### Description of the Related Scheme

A related scheme electromagnetic flowmeter is arranged at a tube to measure and calculate a flow measurement result of a fluid flowing through the tube. The related scheme electromagnetic flowmeter at least comprises two electrodes and two coils. After the two coils are charged, a magnetic flux is formed in the tube, so that when the fluid flows through the magnetic flux in the tube, the fluid induces electromotive forces between the two electrodes. The related scheme electromagnetic flowmeter measures the induced electromotive forces to obtain a plurality of measured signals, wherein the induced electromotive forces (namely, the measured signals) are proportional to the flow volume. Therefore, the related scheme electromagnetic flowmeter utilizes the induced electromotive forces (namely, the measured signals) to be aware of the flow volume and velocity of the fluid.

The measured signals are influenced by many factors. For examples, the electrodes are not aligned well, the coils are not arranged well, the electrodes are worn down due to longstanding usage, or the related scheme electromagnetic flowmeter is interfered by a plurality of empty-tube-detecting voltage signals for detecting whether the tube is in an empty tube status or not, and so on. Especially, for the fluid having a lower electric conductivity, the induced electromotive forces mentioned above are not visible, so the factors mentioned above influencing the measured signals will dominate the measured signals and lower signal-to-noise is expected.

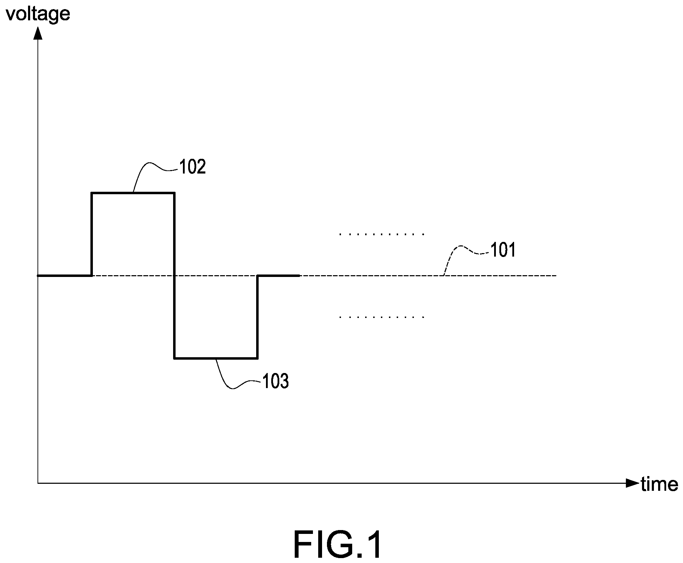

Fig. 1 shows an ideal waveform diagram of an example of the measured signals of the related scheme electromagnetic flowmeter. Because the related scheme electromagnetic flowmeter comprises the two electrodes which are arranged at different locations correspondingly, the measured signals comprise a plurality of first-direction pulse signals 102 and a plurality of second-direction pulse signals 103. For better understanding, Fig. 1 shows only one first-direction pulse signal 102 and only one second-direction pulse signal 103. In the ideal status, a reference voltage 101 of the measured signals (measured reference voltage) is symmetrical and equal. The first-direction pulse signals 102 and the second-direction pulse signals 103 are ideal square waves. When the fluid flowing through the tube is measured by the related scheme electromagnetic flowmeter, the flow measurement result of the fluid = a calibration factor ^{∗} (a maximum of the first-direction pulse signal 102 - a minimum of the second-direction pulse signal 103). Moreover, the related scheme electromagnetic flowmeter presets the calibration factor.

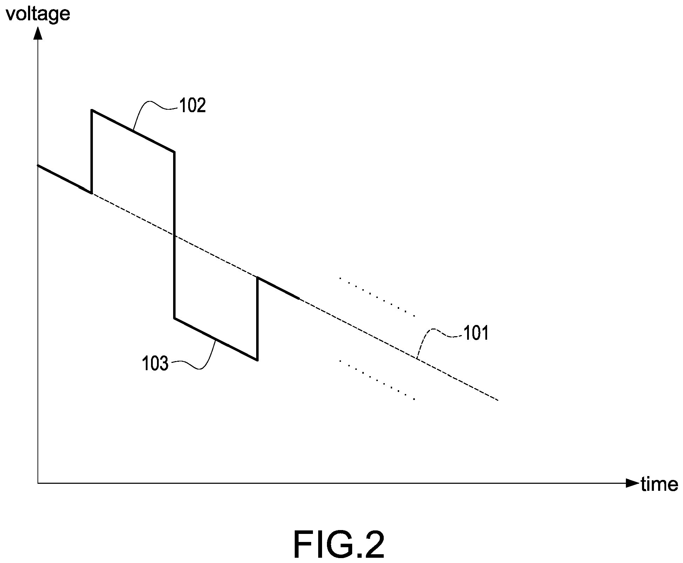

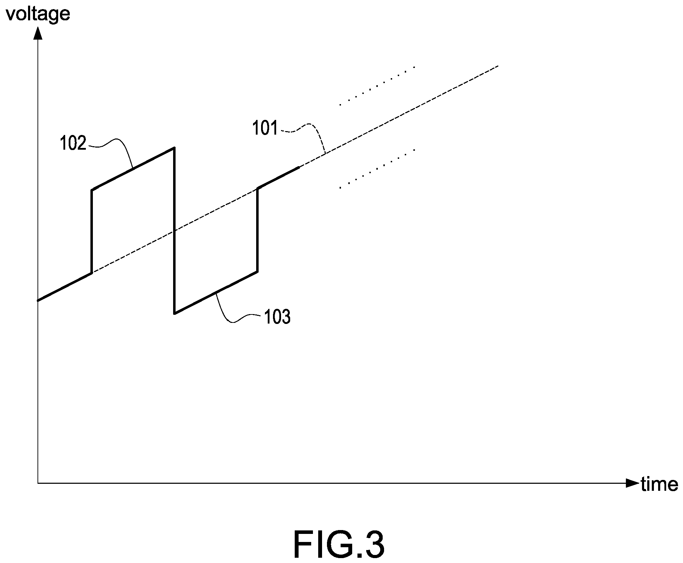

Fig. 2 shows an actual waveform diagram of the first example of the measured signals of the related scheme electromagnetic flowmeter. Fig. 3 shows an actual waveform diagram of the second example of the measured signals of the related scheme electromagnetic flowmeter. As mentioned above, the measured signals are influenced by many unbalanced factors. Therefore, as shown in Fig. 2 and Fig. 3, the measured reference voltage 101 is influenced by the factors, so the measured reference voltage 101 becomes oblique.

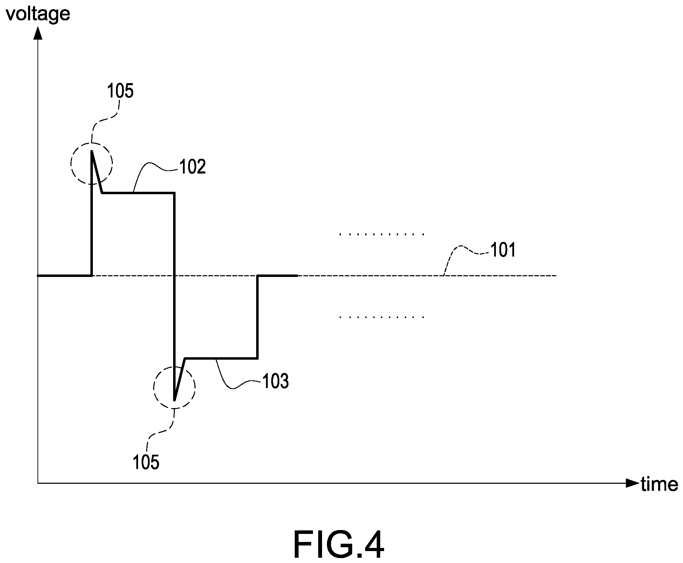

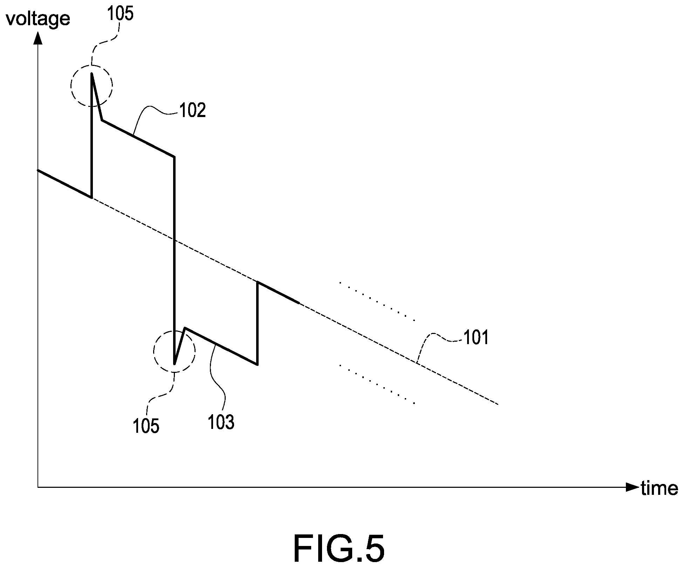

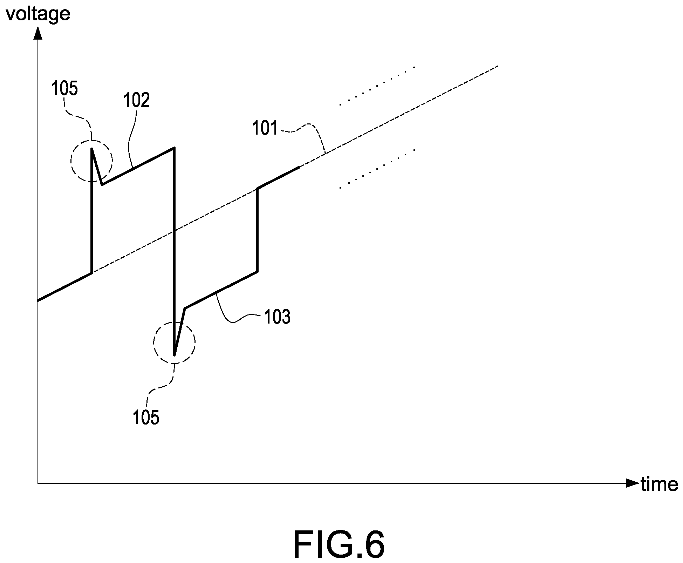

Fig. 4 shows an actual waveform diagram of the third example of the measured signals of the related scheme electromagnetic flowmeter. Fig. 5 shows an actual waveform diagram of the fourth example of the measured signals of the related scheme electromagnetic flowmeter. Fig. 6 shows an actual waveform diagram of the fifth example of the measured signals of the related scheme electromagnetic flowmeter. As shown in Fig. 4, Fig. 5 and Fig. 6, besides the factors mentioned above influencing the measured signals, an overshooting signal 105 will also influence the measured signals. The overshooting signal 105 is also called (namely, is from) an overshoot phenomenon, which is a typical phenomenon generated by the alternating magnetic flux.

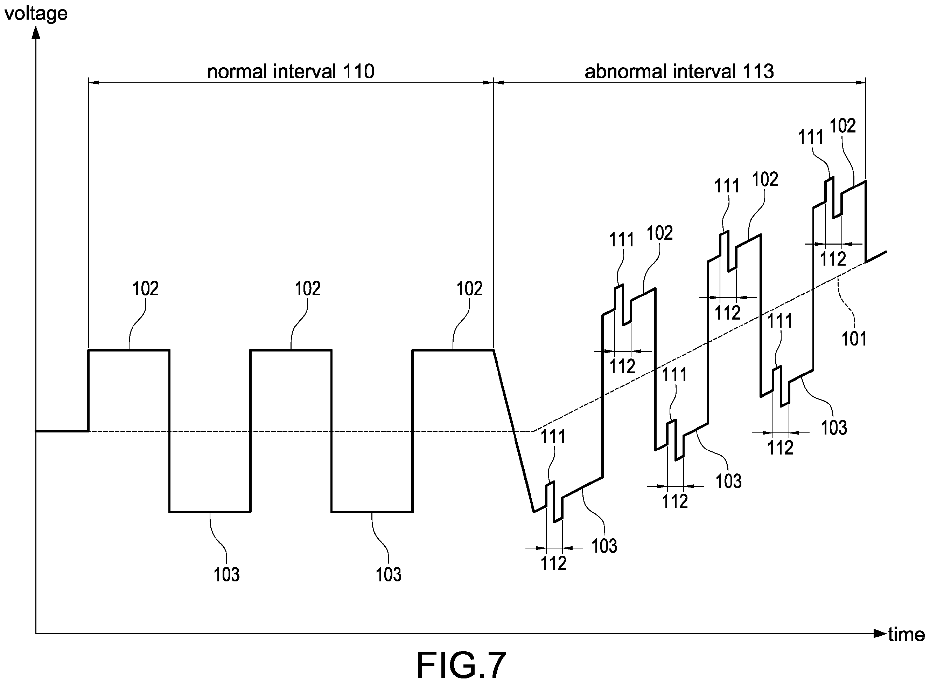

Fig. 7 shows an actual waveform diagram of the sixth example of the measured signals of the related scheme electromagnetic flowmeter. As shown in Fig. 7, in a normal interval 110, the measured reference voltage 101 is stable. The first-direction pulse signals 102 and the second-direction pulse signals 103 are ideal square waves. In an abnormal interval 113, the related scheme electromagnetic flowmeter sends out a plurality of empty-tube-detecting voltage signals 111 in an empty-tube-detecting interval 112 to detect whether the tube is in the empty tube status or not. The measured reference voltage 101 of the measured signals 10 will be influenced by the empty-tube-detecting voltage signals 111, or by other factors mentioned above, so that the measured reference voltage 101 becomes oblique.

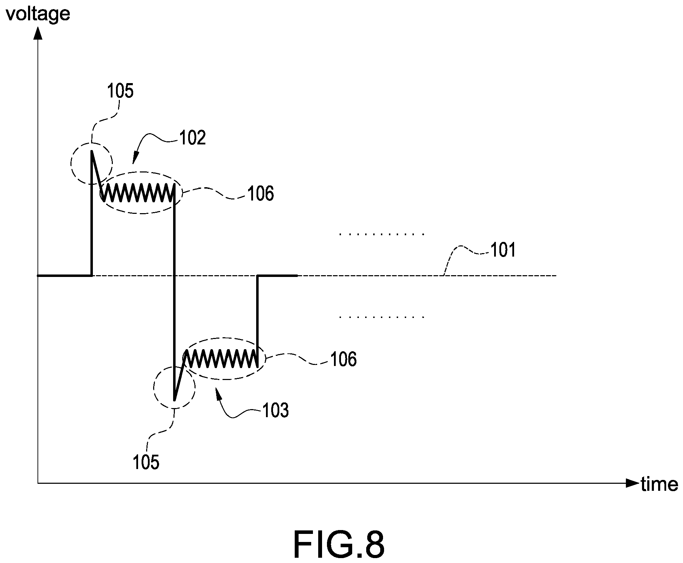

Fig. 8 shows an actual waveform diagram of the seventh example of the measured signals of the related scheme electromagnetic flowmeter. As shown in Fig. 8, besides the overshooting signal 105 mentioned above, Fig. 8 shows a plurality of power-frequency interference signals 106. The power frequency interference is from an alternating-current power. A power frequency of the alternating-current power is between 50 hertz and 60 hertz. Besides the factors mentioned above influencing the flow measurement result of the fluid, the power-frequency interference signals 106 also influence the flow measurement result of the fluid.

US 2004/035180 A1 discloses a flow-calculating scheme applied to an electromagnetic flowmeter according to the preamble of claim 1. The waveform signals are systematically influenced by unwanted effects, causing the waveform signals to follow a non-constant profile. Error estimators assigned to adjacent positive and negative waveform pulses are used. These error estimators are a measure of how steep the influence of the unwanted effects is in the respective sampling interval, to thereby detect their influence on the flow rate measurement.

For this purpose, however, only one single detected pulse signal is used, and then the single detected pulse signal process is repeated to process all of the detected pulse signals. The relationship between these detected pulse signals is not utilized for processing.

In conclusion, it is hard to control those factors that will influence the measured signals of the fluid, so that the flow measurement result of the fluid cannot be obtained accurately.

### SUMMARY OF THE INVENTION

It is an object of the present invention to provide a flow-calculating scheme using an electromagnetic flowmeter wherein the impact of unwanted influences to the measurement signal can be further minimized to thereby further enhance the accuracy of the flow-calculating scheme.

This problem is solved by a flow-calculating scheme as claimed by claim 1. Further advantageous embodiments are the subject-matter of the dependent claims.

The advantage of the present invention is to obtain the flow measurement result of the fluid accurately.

Please refer to the detailed descriptions and figures of the present invention mentioned below for further understanding the technology, scheme and effect of the present invention. The figures are only for references and descriptions, and the present invention is not limited by the figures, but rather defined by the appended claims.

### BRIEF DESCRIPTION OF DRAWING

Fig. 1 shows an ideal waveform diagram of an example of the measured signals of the related scheme electromagnetic flowmeter.
Fig. 2 shows an actual waveform diagram of the first example of the measured signals of the related scheme electromagnetic flowmeter.
Fig. 3 shows an actual waveform diagram of the second example of the measured signals of the related scheme electromagnetic flowmeter.
Fig. 4 shows an actual waveform diagram of the third example of the measured signals of the related scheme electromagnetic flowmeter.
Fig. 5 shows an actual waveform diagram of the fourth example of the measured signals of the related scheme electromagnetic flowmeter.
Fig. 6 shows an actual waveform diagram of the fifth example of the measured signals of the related scheme electromagnetic flowmeter.
Fig. 7 shows an actual waveform diagram of the sixth example of the measured signals of the related scheme electromagnetic flowmeter.
Fig. 8 shows an actual waveform diagram of the seventh example of the measured signals of the related scheme electromagnetic flowmeter.
Fig. 9 shows a waveform diagram of an illustrative embodiment of the measured signals of the electromagnetic flowmeter of the present invention.
Fig. 10 shows a block diagram of an embodiment of the electromagnetic flowmeter of the present invention.
Fig. 11 shows a flow chart of an embodiment of the flow-calculating scheme using the electromagnetic flowmeter of the present invention.
Fig. 12 shows a flow chart of an embodiment of the flow calculation of the present invention.
Fig. 13 shows a block diagram of another embodiment of the electromagnetic flowmeter of the present invention.

### DETAILED DESCRIPTION OF THE INVENTION

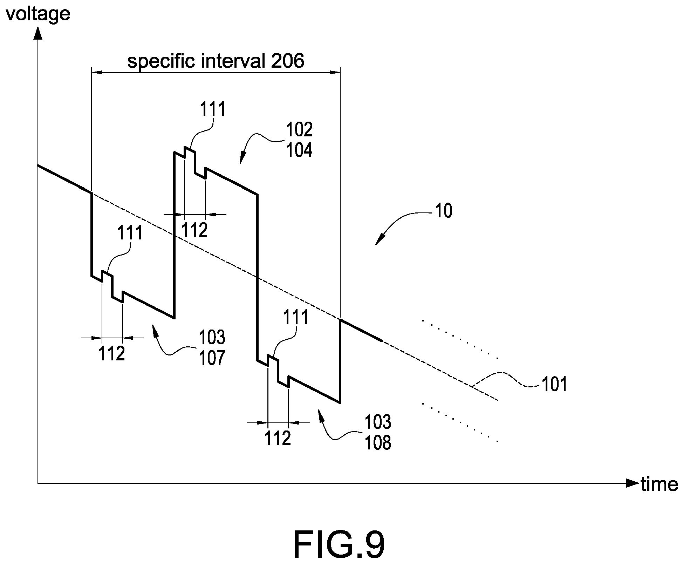

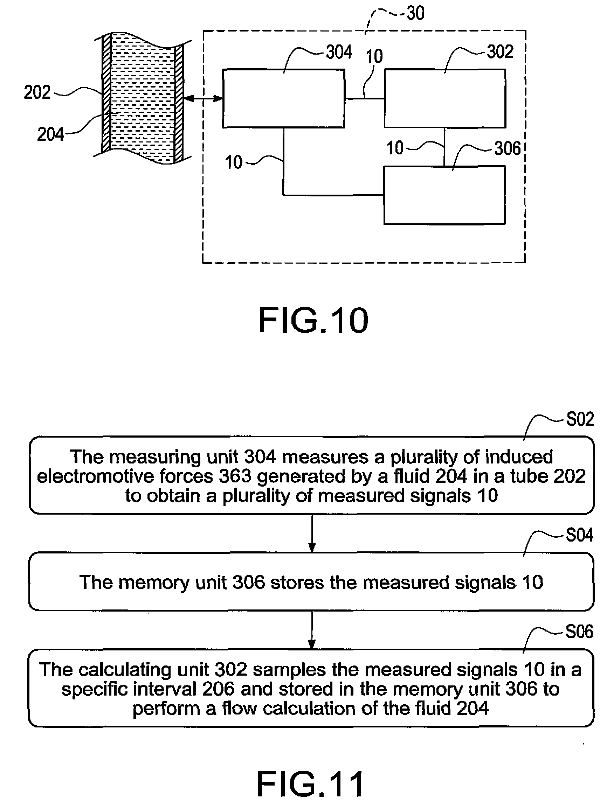

In the present disclosure, numerous specific details are provided, to provide a thorough understanding of embodiments of the invention. Persons of ordinary skill in the art will recognize, however, that the present invention can be practiced without one or more of the specific details. In other instances, well-known details are not shown or described to avoid obscuring aspects of the present invention. Please refer to following detailed description and figures for the technical content of the present invention, which is defined by the appended claims: Fig. 9 shows a waveform diagram of an illustrative embodiment of the measured signals of the electromagnetic flowmeter of the present invention. Fig. 10 shows a block diagram of an embodiment of the electromagnetic flowmeter of the present invention. Fig. 11 shows a flow chart of an embodiment of the flow-calculating scheme using the electromagnetic flowmeter of the present invention. The flow-calculating scheme of the present invention is applied to an electromagnetic flowmeter 30. The electromagnetic flowmeter 30 comprises a calculating unit 302, a measuring unit 304 and a memory unit 306. The units mentioned above are electrically connected to each other. The flow-calculating scheme comprises following steps.

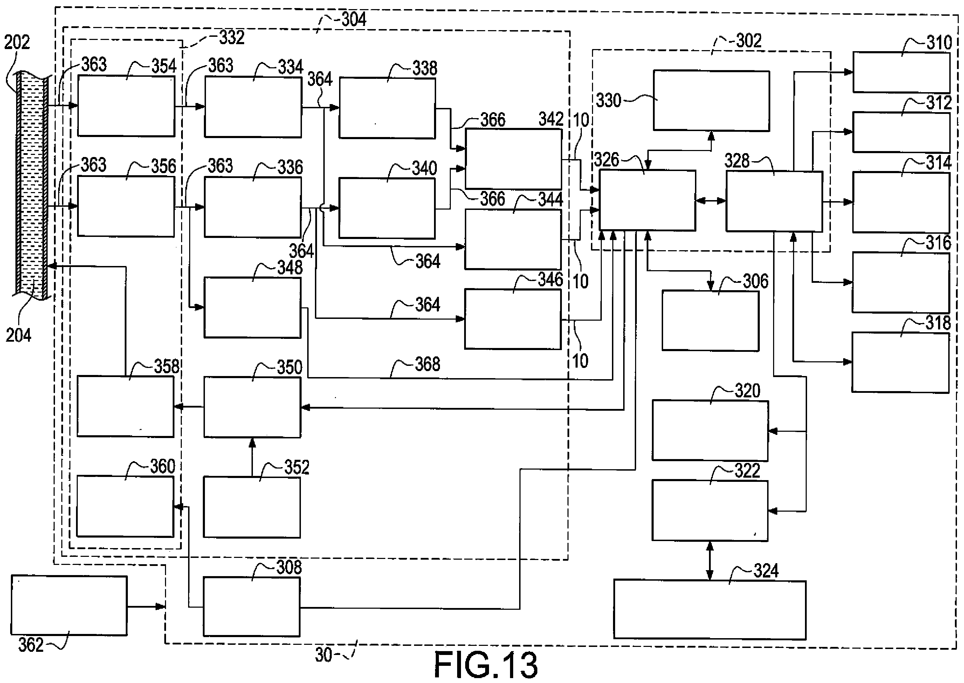

Step S02: The measuring unit 304 measures a plurality of induced electromotive forces 363 (shown in Fig. 13) generated by a fluid 204 in a tube 202 to obtain a plurality of measured signals 10.

Step S04: The memory unit 306 stores the measured signals 10.

Step S06: The calculating unit 302 samples the measured signals 10 in a specific interval 206 and stored in the memory unit 306 to perform a flow calculation of the fluid 204. Namely, the calculating unit 302 samples the measured signals 10 in a specific interval 206 to perform the flow calculation of the fluid 204, wherein the measured signals 10 are stored in the memory unit 306.

The measured signals 10 of the present invention comprise a plurality of first-direction pulse signals 102 and a plurality of second-direction pulse signals 103. For better understanding, Fig. 9 shows only one first-direction pulse signal 102 and two second-direction pulse signals 103. Ideally, a measured reference voltage 101 of the measured signals 10 is symmetrical and equal, but the measured reference voltage 101 shown in Fig. 9 is oblique, in order to show the actual situation. However, the calculating unit 302 can utilize a conformal mapping to rotate the measured signals 10 a predetermined angle. After the calculating unit 302 utilizes the conformal mapping to rotate the measured signals 10 the predetermined angle, then the calculating unit 302 performs the flow calculation. Moreover, rotating the predetermined angle renders that the measured signals 10 and the measured reference voltage 101 become symmetrical and equal.

Please refer to Fig. 8 again. The power-frequency interference signals 106 mentioned above influence the flow calculation of the fluid 204. Therefore, the calculating unit 302 of the present invention samples the measured signals 10 by an r multiple of a power frequency of an alternating-current power which is not shown in the figures and is supplied to the electromagnetic flowmeter 30. Moreover, the calculating unit 302 defines that the r multiple is a positive integer multiple greater than zero. Namely, the calculating unit 302 samples the measured signals 10 by the positive integer multiple greater than zero and of the power frequency of the alternating-current power. The power frequency of the alternating-current power is between 50 hertz and 60 hertz. Moreover, the r multiple can be also called a resonant frequency multiple. The calculating unit 302 assigns that the specific interval 206 comprises a u multiple of a power period of the alternating-current power. Moreover, the calculating unit 302 defines that the u multiple is a positive integer multiple greater than zero. Namely, the calculating unit 302 assigns that the specific interval 206 comprises the positive integer multiple greater than zero and of the power period of the alternating-current power. Moreover, the u multiple can be also called an extension period multiple. Interferences of a plurality of noises (namely, the power-frequency interference signals 106 shown in Fig. 8) can be reduced greatly based on the calculating unit 302 sampling the measured signals 10 by the r multiple of the power frequency of the alternating-current power and based on the calculating unit 302 assigning that the specific interval 206 comprises the u multiple of the power period of the alternating-current power.

As shown in Fig. 9, at least one first-direction pulse signal 102 and at least two second-direction pulse signals 103 are in the specific interval 206. The at least two second-direction pulse signals 103 are before the at least one first-direction pulse signal 102 and after the at least one first-direction pulse signal 102 respectively. Namely, one second-direction pulse signal 103 is before the at least one first-direction pulse signal 102, while one second-direction pulse signal 103 is after the at least one first-direction pulse signal 102.

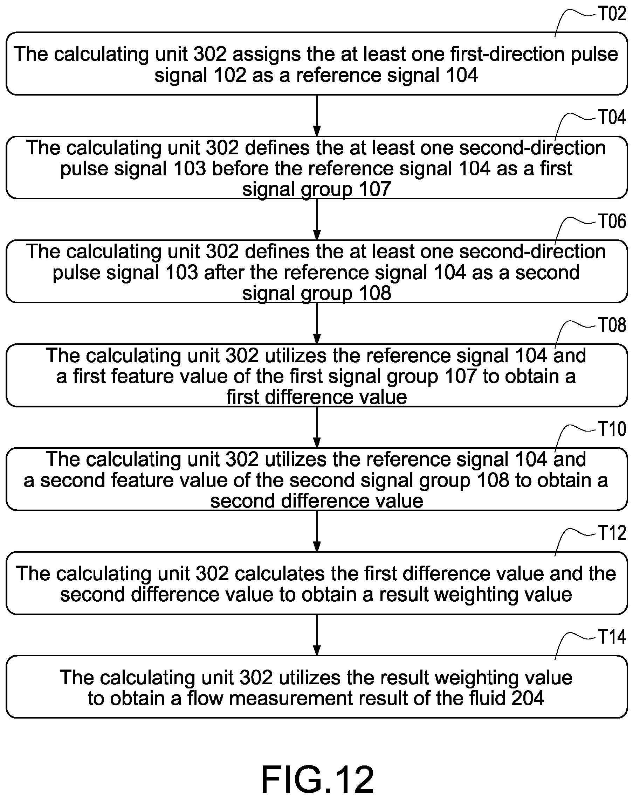

Fig. 12 shows a flow chart of an embodiment of the flow calculation of the present invention. Please refer to Fig. 9 and Fig. 10 as well at the same time. The flow calculation mentioned above comprises following steps.

Step T02: The calculating unit 302 assigns the at least one first-direction pulse signal 102 as a reference signal 104.

Step T04: The calculating unit 302 defines the at least one second-direction pulse signal 103 before the reference signal 104 as a first signal group 107.

Step T06: The calculating unit 302 defines the at least one second-direction pulse signal 103 after the reference signal 104 as a second signal group 108.

Step T08: The calculating unit 302 utilizes the reference signal 104 and a first feature value of the first signal group 107 to obtain a first difference value. Namely, the calculating unit 302 utilizes the reference signal 104 and the first feature value of the second-direction pulse signal(s) 103 of the first signal group 107 to obtain the first difference value.

Step T10; The calculating unit 302 utilizes the reference signal 104 and a second feature value of the second signal group 108 to obtain a second difference value. Namely, the calculating unit 302 utilizes the reference signal 104 and the second feature value of the second-direction pulse signal(s) 103 of the second signal group 108 to obtain the second difference value.

Step T12: The calculating unit 302 calculates the first difference value and the second difference value to obtain a result weighting value. For the embodiment of Fig. 9, the steps mentioned above can be expressed as: The result weighting value = [(the reference signal 104 - the at least one second-direction pulse signal 103 of the second signal group 108) + (the reference signal 104 - the at least one second-direction pulse signal 103 of the first signal group 107)]/2. Therefore, the result weighting value which is not influenced by the measured reference voltage 101 which is oblique can be obtained. Namely, the influence of the measured reference voltage 101 which is oblique can be eliminated (namely, the present invention comprises a dynamic zero level calibration of the measured reference voltage 101) by utilizing the negligible feature of the slope changes of the measured reference voltage 101 in the unit time and by utilizing at least three measured signals 10 (namely, the reference signal 104, the at least one second-direction pulse signal 103 of the second signal group 108 and the at least one second-direction pulse signal 103 of the first signal group 107).

Step T14: The calculating unit 302 utilizes the result weighting value to obtain a flow measurement result of the fluid 204. The calculating unit 302 utilizes a product of the result weighting value and a calibration factor to obtain the flow measurement result of the fluid 204. The calibration factor is between 0.1 and 2.0. The electromagnetic flowmeter 30 presets the calibration factor.

Fig. 9 shows a first-direction pulse signal 102 and two second-direction pulse signal 103 in the specific interval 206, but the present invention is not limited by it. A plurality of the first-direction pulse signals 102 and a plurality of the second-direction pulse signals 103 can be in the specific interval 206. Therefore, in the step T02 mentioned above, the calculating unit 302 assigns one of the first-direction pulse signals 102 as the reference signal 104. In the step T04 mentioned above, the calculating unit 302 defines the second-direction pulse signals 103 before the reference signal 104 as the first signal group 107. In the step T06 mentioned above, the calculating unit 302 defines the second-direction pulse signals 103 after the reference signal 104 as the second signal group 108.

In an embodiment of the present invention, a first quantity of the second-direction pulse signals 103 of the first signal group 107 defined by the calculating unit 302 is equal to a second quantity of the second-direction pulse signals 103 of the second signal group 108 defined by the calculating unit 302. For example, the first quantity is equal to 100, and the second quantity is equal to 100.

In regard to the empty tube detection, the calculating unit 302 defines that the specific interval 206 comprises at least one empty-tube-detecting interval 112 so the measuring unit 304 sends out a plurality of empty-tube-detecting voltage signals 111 to detect whether the tube 202 is in an empty tube status or not. After the measuring unit 304 sends out the empty-tube-detecting voltage signals 111, the empty-tube-detecting voltage signals 111 will influence the measured reference voltage 101 of the measured signals 10 (namely, the measured reference voltage 101 becomes oblique). Moreover, the calculating unit 302 defines that the empty-tube-detecting interval 112 is less than one-tenth of the specific interval 206.

Therefore, in the step T08, the calculating unit 302 avoids the empty-tube-detecting interval 112 that the measuring unit 304 sends out the empty-tube-detecting voltage signals 111 so the calculating unit 302 correctly obtains the first feature value of the first signal group 107. In the step T10, the calculating unit 302 avoids the empty-tube-detecting interval 112 that the measuring unit 304 sends out the empty-tube-detecting voltage signals 111 so the calculating unit 302 correctly obtains the second feature value of the second signal group 108. Namely, the calculating unit 302 avoids the empty-tube-detecting interval 112 that the measuring unit 304 sends out the empty-tube-detecting voltage signals 111, and then the calculating unit 302 performs the flow calculation, in order to eliminate the influence from the empty-tube-detecting voltage signals 111 to the measured reference voltage 101 of the measured signals 10.

In another embodiment of the present invention, in the step T02, the calculating unit 302 defines the reference signal 104 as a present voltage signal, and defines that a present voltage signal peak value is a maximum of the present voltage signal or a minimum of the present voltage signal. In the step T04, the calculating unit 302 defines the first signal group 107 as a previous-y-time voltage signal, and defines the y as a positive integer greater than zero. After the step T10, the flow calculation further comprises that the calculating unit 302 defines a P value as a predetermined voltage value (for example, a predetermined specific phase voltage value or a specific level voltage reference value). The calculating unit 302 calculates: a present flow signal = {(the present voltage signal peak value - an average value of the P value of the previous-y-time voltage signal) + (the present voltage signal peak value - the P value of the present voltage signal)}/2.

An embodiment of the content mentioned above is that: in the step T02, the calculating unit 302 defines the present voltage signal peak value as the maximum of the present voltage signal. The calculating unit 302 defines the P value as the minimum. Therefore, the calculating unit 302 calculates: the present flow signal = {(the maximum of the present voltage signal - the average value of the minimum of the previous-y-time voltage signal) + (the maximum of the present voltage signal - the minimum of the present voltage signal)}/2.

Fig. 13 shows a block diagram of another embodiment of the electromagnetic flowmeter of the present invention. An electromagnetic flowmeter 30 comprises the calculating unit 302 mentioned above, the measuring unit 304 mentioned above, the memory unit 306 mentioned above, a waveform oscilloscope 308, a monitor 310, a keyboard 312, a frequency output port 314, a digital output port 316, a communication output port 318, a ferroelectric random access memory 320, a digital-to-analog converter 322 and a current highway-addressable-remote-transducer output port 324. The calculating unit 302 comprises a first microprocessor 326, a second microprocessor 328 and a balance voltage analyzer 330. The measuring unit 304 comprises a transducer 332, a first low pass filter 334, a second low pass filter 336, a first amplifier 338, a second amplifier 340, a first analog-to-digital converter 342, a second analog-to-digital converter 344, a third analog-to-digital converter 346, an empty-tube-detecting circuit 348, a direction switch 350 and a current controller 352. The transducer 332 comprises a first electrode 354, a second electrode 356, a coil circuit 358 and a reference ground side 360. The components mentioned above are electrically connected to each other, and a power supply 362 supplies power to the components mentioned above.

The electromagnetic flowmeter 30 is arranged at the tube 202 to measure and calculate the flow measurement result of the fluid 204 flowing through the tube 202. The coil circuit 358 comprises two coils (not shown in Fig. 13). The first microprocessor 326 and the current controller 352 control the direction switch 350 to charge the two coils. After the two coils are charged, a magnetic flux is formed in the tube 202, so that when the fluid 204 flows through the magnetic flux in the tube 202, the fluid 204 generates a plurality of induced electromotive forces 363 between the first electrode 354 and the second electrode 356.

The first electrode 354 and the second electrode 356 send the induced electromotive forces 363 to the first low pass filter 334 and the second low pass filter 336. The first low pass filter 334 and the second low pass filter 336 low pass filter the induced electromotive forces 363 to obtain a plurality of filtered signals 364. The first low pass filter 334 and the second low pass filter 336 send the filtered signals 364 to the first amplifier 338, the second amplifier 340, the second analog-to-digital converter 344 and the third analog-to-digital converter 346.

The first amplifier 338 and the second amplifier 340 amplify the filtered signals 364 to obtain a plurality of amplified signals 366. The first amplifier 338 and the second amplifier 340 send the amplified signals 366 to the first analog-to-digital converter 342. The first analog-to-digital converter 342 converts the amplified signals 366 into the measured signals 10 mentioned above. The first analog-to-digital converter 342 sends the measured signals 10 to the first microprocessor 326.

The second analog-to-digital converter 344 and the third analog-to-digital converter 346 convert the filtered signals 364 into the measured signals 10 mentioned above. The second analog-to-digital converter 344 and the third analog-to-digital converter 346 send the measured signals 10 to the first microprocessor 326. The empty-tube-detecting circuit 348 sends an empty-tube-detecting feedback signal 368 to the first microprocessor 326. Moreover, the electromagnetic flowmeter 30 sends out the empty-tube-detecting voltage signals 111 (not shown in Fig. 13) mentioned above through the first electrode 354 and the second electrode 356, so that the empty-tube-detecting circuit 348 can detect and send the empty-tube-detecting feedback signal 368 to the first microprocessor 326 to determine whether the tube 202 is in the empty tube status or not (namely, to determine the impedance between the first electrode 354 and the second electrode 356).

The first microprocessor 326 cooperates with the balance voltage analyzer 330 to utilize the measured signals 10 and the empty-tube-detecting feedback signal 368 to perform a voltage measurement and a resistance measurement. The second microprocessor 328 utilizes the measured signals 10, the empty-tube-detecting feedback signal 368, the voltage measurement and the resistance measurement to perform a mass flow calculation, a volume flow calculation, a velocity calculation, a total volume calculation, a tube status determination, a frequency monitoring, a tube status monitoring and a temperature monitoring (which requires an extra temperature sensor which is not shown in Fig. 13). The other contents of Fig. 13 are similar with the contents of the other figures or the contents mentioned above, and would be not repeated here.

## Claims

1. A flow-calculating scheme applied to an electromagnetic flowmeter (30), the electromagnetic flowmeter (30) comprising a calculating unit (302), a measuring unit (304) and a memory unit (306), the flow-calculating scheme comprising:
a) measuring, by the measuring unit (304), a plurality of induced electromotive forces (363) generated by a fluid (204) in a tube (202) to obtain a plurality of measured signals (10) represented by a measured reference voltage (101) of constant amplitude or of linear time dependence and a series of pulse signals (102, 103) superimposed on the measured reference voltage (101);
b) storing the measured signals (10) by the memory unit (306); and
c) sampling, by the calculating unit (302), the measured signals (10) stored in the memory unit (306) in a specific interval (206) to perform a flow calculation of the fluid (204),
wherein at least one first-direction pulse signal (102) and at least two second-direction pulse signals (103) are in the specific interval (206), and the at least two second-direction pulse signals (103) are before the at least one first-direction pulse signal (102) and after the at least one first-direction pulse signal (102) respectively;
**characterized in that** the flow calculation comprises:
d) assigning the at least one first-direction pulse signal (102) as a reference signal (104) by the calculating unit (302);
e) defining the at least one second-direction pulse signal (103) before the reference signal (104) as a first signal group (107) by the calculating unit (302);
f) defining the at least one second-direction pulse signal (103) after the reference signal (104) as a second signal group (108) by the calculating unit (302);
g) utilizing, by the calculating unit (302), the reference signal (104) and a first feature value of the first signal group (107) to obtain a first difference value;
h) utilizing, by the calculating unit (302), the reference signal (104) and a second feature value of the second signal group (108) to obtain a second difference value;
i) calculating, by the calculating unit (302), the first difference value and the second difference value to obtain a result weighting value; and
j) utilizing, by the calculating unit (302), the result weighting value to obtain a flow measurement result of the fluid (204);
wherein the at least one first-direction pulse signal (102) is of an amplitude higher than the measured reference voltage (101); and
the at least one second-direction pulse signal (103) is of an amplitude lower than the measured reference voltage (101);
wherein in the step c), the calculating unit (302) utilizes a conformal mapping to rotate the measured signals (10) by a predetermined angle and then performs the flow calculation;
wherein in the step d), the calculating unit (302) defines the reference signal (104) as a present voltage signal, and defines that a present voltage signal peak value is a maximum of the present voltage signal or a minimum of the present voltage signal;
in the step e), the calculating unit (302) defines the first signal group (107) as a previous-y-time voltage signal, and defines the y as a positive integer greater than zero; and
after the step i), the flow calculation further comprises:
i1) defining a p value as a predetermined voltage value by the calculating unit (302); and
i2) calculating, by the calculating unit (302): a present flow signal = {(the present voltage signal peak value - an average value of the p value of the previous-y-time voltage signal) + (the present voltage signal peak value - the p value of the present voltage signal)}/2.

2. The flow-calculating scheme as claimed in claim 1, wherein a plurality of the first-direction pulse signals (102) and a plurality of the second-direction pulse signals (103) are in the specific interval (206);
in the step d), the calculating unit (302) assigns one of the first-direction pulse signals (102) as the reference signal (104);
in the step e), the calculating unit (302) defines the second-direction pulse signals (103) before the reference signal (104) as the first signal group (107); and
in the step f), the calculating unit (302) defines the second-direction pulse signals (103) after the reference signal (104) as the second signal group (108).

3. The flow-calculating scheme as claimed in claim 2, wherein a first quantity of the second-direction pulse signals (103) of the first signal group (107) defined by the calculating unit (302) is equal to a second quantity of the second-direction pulse signals (103) of the second signal group (108) defined by the calculating unit (302).

4. The flow-calculating scheme as claimed in any of the preceding claims, wherein in the step j), the calculating unit (302) utilizes a product of the result weighting value and a calibration factor to obtain the flow measurement result of the fluid (204), wherein the calibration factor is between 0.1 and 2.0.

5. The flow-calculating scheme as claimed in any of the preceding claims, wherein
in the step c), the calculating unit (302) samples the measured signals (10) by an r multiple of a power frequency of an alternating-current power;
the calculating unit (302) defines that the r multiple is a positive integer multiple greater than zero;
the power frequency of the alternating-current power is between 50 hertz and 60 hertz;
in the step c), the calculating unit (302) assigns that the specific interval (206) comprises au multiple of a power period of the alternating-current power; and
the calculating unit (302) defines that the u multiple is a positive integer multiple greater than zero.

6. The flow-calculating scheme as claimed in any of the preceding claims, wherein the calculating unit (302) defines that the specific interval (206) comprises an empty-tube-detecting interval (112) so the measuring unit (304) sends out a plurality of empty-tube-detecting voltage signals (111) to detect whether the tube (202) is in an empty tube status or not; the calculating unit (302) defines that the empty-tube-detecting interval (112) is less than one-tenth of the specific interval (206).

7. The flow-calculating scheme as claimed in claim 6, wherein
in the step g), the calculating unit (302) avoids an empty-tube-detecting interval (112) that the measuring unit (304) sends out a plurality of empty-tube-detecting voltage signals (111) so the calculating unit (302) correctly obtains the first feature value of the first signal group (107);
in the step h), the calculating unit (302) avoids the empty-tube-detecting interval (112) that the measuring unit (304) sends out the empty-tube-detecting voltage signals (111) so the calculating unit (302) correctly obtains the second feature value of the second signal group (108); and
after the measuring unit (304) sends out the empty-tube-detecting voltage signals (111), the empty-tube-detecting voltage signals (111) influences the reference voltage (101) of the measured signals (10), and then the calculating unit (302) avoids the empty-tube-detecting interval (112) that the measuring unit (304) sends out the empty-tube-detecting voltage signals (111), and then the calculating unit (302) performs the flow calculation.

8. The flow-calculating scheme as claimed in any of the preceding claims, wherein the predetermined voltage value is a predetermined specific phase voltage value or a specific level voltage reference value;
in the step d), the calculating unit (302) defines the present voltage signal peak value as the maximum of the present voltage signal;
in the step il), the calculating unit (302) defines the p value as the minimum; and
in the step i2), the calculating unit (302) calculates:
a second flow signal = {(the maximum of the present voltage signal - the average value of the minimum of the previous-y-time voltage signal) + (the maximum of the present voltage signal - the minimum of the present voltage signal)}/2.

## Patentansprüche

1. Durchflussberechnungsschema, das auf einen elektromagnetischen Durchflussmesser (30) angewendet wird, wobei der elektromagnetische Durchflussmesser (30) eine Berechnungseinheit (302), eine Messeinheit (304) und eine Speichereinheit (306) umfasst, wobei das Durchflussberechnungsschema umfasst:
a) Messen, durch die Messeinheit (304), einer Mehrzahl von induzierten elektromotorischen Kräften (363), die durch ein Fluid (204) in einem Rohr (202) erzeugt werden, um eine Mehrzahl von Messsignalen (10), die durch eine gemessene Referenzspannung (101) von konstanter Amplitude oder einer linearen Zeitabhängigkeit dargestellt sind, und eine Reihe von Impulssignalen (102, 103) zu erhalten, die der gemessenen Referenzspannung (101) überlagert sind;
b) Speichern der Messsignale (10) durch die Speichereinheit (306); und
c) Abtasten der in der Speichereinheit (306) gespeicherten Messsignale (10) durch die Berechnungseinheit (302) in einem bestimmten Intervall (206), um eine Durchflussberechnung des Fluids (204) durchzuführen,
wobei mindestens ein Impulssignal (102) in einer ersten Richtung und mindestens zwei Impulssignale (103) in einer zweiten Richtung in dem bestimmten Intervall (206) liegen und wobei die mindestens zwei Impulssignale (103) in der zweiten Richtung vor dem mindestens einen Impulssignal (102) in der ersten Richtung bzw. nach dem mindestens einen Impulssignal (102) in der ersten Richtung liegen;
**dadurch gekennzeichnet, dass** die Durchflussberechnung umfasst:
d) Zuordnen des mindestens einen Impulssignals (102) in der ersten Richtung als ein Referenzsignal (104) durch die Berechnungseinheit (302);
e) Definieren des mindestens einen Impulssignals (103) in der zweiten Richtung vor dem Referenzsignal (104) als eine erste Signalgruppe (107) durch die Berechnungseinheit (302);
f) Definieren des mindestens einen Impulssignals (103) in der zweiten Richtung nach dem Referenzsignal (104) als eine zweite Signalgruppe (108) durch die Berechnungseinheit (302);
g) Verwenden des Referenzsignals (104) und eines ersten Merkmalswerts der ersten Signalgruppe (107) durch die Berechnungseinheit (302), um einen ersten Differenzwert zu erhalten;
h) Verwenden des Referenzsignals (104) und eines zweiten Merkmalswerts der zweiten Signalgruppe (108) durch die Berechnungseinheit (302), um einen zweiten Differenzwert zu erhalten;
i) Berechnen des ersten Differenzwertes und des zweiten Differenzwertes durch die Berechnungseinheit (302), um einen Ergebnisgewichtungswert zu erhalten; und
j) Verwendung des Ergebnisgewichtungswertes durch die Berechnungseinheit (302), um ein Durchflussmessergebnis des Fluids zu erhalten (204);
wobei das mindestens eine Impulssignal (102) in der ersten Richtung eine größere Amplitude als die gemessene Referenzspannung (101) aufweist; und
wobei das mindestens eine Impulssignal (103) in der zweiten Richtung eine kleinere Amplitude als die gemessene Referenzspannung (101) aufweist;
wobei in dem Schritt c) die Berechnungseinheit (302) eine konforme Abbildung verwendet, um die Messsignale (10) um einen vorbestimmten Winkel zu drehen, und dann die Durchflussberechnung durchführt;
wobei in dem Schritt d) die Berechnungseinheit (302) das Referenzsignal (104) als ein aktuelles Spannungssignal definiert und definiert, dass ein Spitzenwert des aktuellen Spannungssignals ein Maximum des aktuellen Spannungssignals oder ein Minimum des aktuellen Spannungssignals ist;
wobei in dem Schritt e) die Berechnungseinheit (302) die erste Signalgruppe (107) als ein vorheriges Spannungssignal definiert und definiert, dass y als eine positive ganze Zahl größer als Null ist; und
wobei nach dem Schritt i) die Durchflussberechnung weiter umfasst:
i1) Definieren eines p-Wertes als einen vorbestimmten Spannungswert durch die Berechnungseinheit (302); und
i2) Berechnen, durch die Berechnungseinheit (302): ein aktuelles Durchflusssignal = {(der Spitzenwert des aktuellen Spannungssignals - ein Mittelwert des p-Wertes des vorhergehenden y_Zeit-Spannungssignals) + (der Spitzenwert des aktuellen Spannungssignals - der p-Wert des aktuellen Spannungssignals)}/2.

2. Durchflussberechnungsschema nach Anspruch 1, wobei eine Mehrzahl der Impulssignale (102) in der ersten Richtung und eine Mehrzahl der Impulssignale (103) in der zweiten Richtung in dem bestimmten Intervall (206) liegen;
in dem Schritt d) die Berechnungseinheit (302) eines der Impulssignale (102) in der ersten Richtung als das Referenzsignal (104) zuordnet;
in dem Schritt e) die Berechnungseinheit (302) die Impulssignale (103) in der zweiten Richtung vor dem Referenzsignal (104) als die erste Signalgruppe (107) definiert; und
in dem Schritt f) die Berechnungseinheit (302) die Impulssignale (103) in der zweiten Richtung nach dem Referenzsignal (104) als die zweite Signalgruppe (108) definiert.

3. Durchflussberechnungsschema nach Anspruch 2, wobei eine erste Menge der durch die Berechnungseinheit (302) definierten Impulssignale (103) in der zweiten Richtung der ersten Signalgruppe (107) gleich einer zweiten Menge der durch die Berechnungseinheit (302) definierten Impulssignale (103) in der zweiten Richtung der zweiten Signalgruppe (108) ist.

4. Durchflussberechnungsschema nach einem der vorhergehenden Ansprüche, wobei in dem Schritt j) die Berechnungseinheit (302) ein Produkt des Ergebnisgewichtungswertes und eines Kalibrierungsfaktors verwendet, um das Durchflussmessergebnis des Fluids (204) zu erhalten, wobei der Kalibrierungsfaktor zwischen 0,1 und 2,0 liegt.

5. Durchflussberechnungsschema nach einem der vorhergehenden Ansprüche,
in dem Schritt c) die Berechnungseinheit (302) die Messsignale (10) mit einem r-fachen einer Leistungsfrequenz einer Wechselstromleistung abtastet;
die Berechnungseinheit (302) definiert, dass das r-Multiple ein positives ganzzahliges Vielfaches größer als Null ist;
die Leistungsfrequenz der Wechselstromleistung zwischen 50 Hertz und 60 Hertz liegt;
in dem Schritt c) die Berechnungseinheit (302) zuordnet, dass das bestimmte Intervall (206) ein u-faches einer Leistungsperiode der Wechselstromleistung umfasst; und
die Berechnungseinheit (302) definiert, dass das u-fache ein positives ganzzahliges Vielfaches größer als Null ist.

6. Durchflussberechnungsschema nach einem der vorhergehenden Ansprüche, wobei die Berechnungseinheit (302) definiert, dass das bestimmte Intervall (206) ein Rohr-Leer-Erfassungsintervall (112) umfasst, so dass die Messeinheit (304) eine Mehrzahl von Rohr-Leer-Erfassungs-Spannungssignalen (111) aussendet um zu erfassen, ob sich das Rohr (202) in einem Rohr-Leer-Zustand befindet oder nicht; die Berechnungseinheit (302) definiert, dass das Rohr-Leer-Erfassungsintervall (112) weniger als ein Zehntel des bestimmten Intervalls (206) beträgt.

7. Durchflussberechnungsschema nach Anspruch 6, wobei
in dem Schritt g) die Berechnungseinheit (302) ein Rohr-Leer-Erfassungsintervall (112), in welchem die Messeinheit (304) eine Mehrzahl von Rohr-Leer-Erfassungsspannungs-Signalen (111) aussendet, vermeidet, so dass die Berechnungseinheit (302) den ersten Merkmalswert der ersten Signalgruppe (107) korrekt erhält;
in dem Schritt h) die Berechnungseinheit (302) das Rohr-Leer-Erfassungsintervall (112), in welchem die Messeinheit (304) die Rohr-Leer-Erfassungs-Spannungssignale (111) aussendet, vermeidet, so dass die Berechnungseinheit (302) den zweiten Merkmalswert der zweiten Signalgruppe (108) korrekt erhält; und
nachdem die Messeinheit (304) die Rohr-Leer-Erfassungsspannungs-Signale (111) aussendet, die Rohr-Leer-Erfassungsspannungs-Signale (111) die Referenzspannung (101) der Messsignale (10) beeinflussen, und dann die Berechnungseinheit (302) das Rohr-Leer-Erfassungsintervall (112) vermeidet, in welchem die Messeinheit (304) die Rohr-Leer-Erfassungs-Spannungssignale (111) aussendet, und dann die Berechnungseinheit (302) die Durchflussberechnung durchführt.

8. Durchflussberechnungsschema nach einem der vorhergehenden Ansprüche, wobei der vorbestimmte Spannungswert ein vorbestimmter spezifischer Phasenspannungswert oder ein vorbestimmter spezifischer Pegelspannungsreferenzwert ist;
in dem Schritt d) die Berechnungseinheit (302) den aktuellen Spannungssignal-Spitzenwert als das Maximum des aktuellen Spannungssignals definiert;
in dem Schritt i1) die Berechnungseinheit (302) den p-Wert als das Minimum definiert; und in dem Schritt i2) die Berechnungseinheit (302) berechnet:
ein zweites Durchflusssignal = {(das Maximum des aktuellen Spannungssignals - der Mittelwert des Minimums des vorhergehenden y-Zeit-Spannungssignals) + (das Maximum des aktuellen Spannungssignals - das Minimum des aktuellen Spannungssignals)}/2.

## Revendications

1. Schéma de calcul de débit appliqué à un débitmètre électromagnétique (30), le débitmètre électromagnétique (30) comprenant une unité de calcul (302), une unité de mesure (304) et une unité de mémoire (306), le schéma de calcul de débit comprenant :
a) mesurer, par l'unité de mesure (304), une pluralité de forces électromotrices induites (363) générées par un fluide (204) dans un tube (202) pour obtenir une pluralité de signaux mesurés (10) représentés par une tension de référence mesurée (101) d'amplitude constante ou de dépendance temporelle linéaire et une série de signaux d'impulsion (102, 103) superposés sur la tension de référence mesurée (101) ;
b) stocker les signaux mesurés (10) par l'unité de mémoire (306) ; et
c) échantillonner, par l'unité de calcul (302), les signaux mesurés (10) stockés dans l'unité de mémoire (306) selon un intervalle spécifique (206) pour réaliser un calcul de débit du fluide (204),
au moins un signal d'impulsion de première direction (102) et au moins deux signaux d'impulsion de seconde direction (103) se trouvant dans l'intervalle spécifique (206), et les au moins deux signaux d'impulsion de seconde direction (103) étant avant l'au moins un signal d'impulsion de première direction (102) et après l'au moins un signal d'impulsion de première direction (102), respectivement ;
**caractérisé par le fait que** le calcul de débit comprend :
d) désigner l'au moins un signal d'impulsion de première direction (102) comme signal de référence (104) par l'unité de calcul (302) ;
e) définir l'au moins un signal d'impulsion de seconde direction (103) avant le signal de référence (104) comme premier groupe de signaux (107) par l'unité de calcul (302) ;
f) définir l'au moins un signal d'impulsion de seconde direction (103) après le signal de référence (104) comme second groupe de signaux (108) par l'unité de calcul (302) ;
g) utiliser, par l'unité de calcul (302), le signal de référence (104) et une première valeur caractéristique du premier groupe de signaux (107) pour obtenir une première valeur de différence ;
h) utiliser, par l'unité de calcul (302), le signal de référence (104) et une seconde valeur caractéristique du second groupe de signaux (108) pour obtenir une seconde valeur de différence ;
i) calculer, par l'unité de calcul (302), la première valeur de différence et la seconde valeur de différence pour obtenir une valeur de pondération de résultat ; et
j) utiliser, par l'unité de calcul (302), la valeur de pondération de résultat pour obtenir un résultat de mesure de débit du fluide (204) ;
l'au moins un signal d'impulsion de première direction (102) étant d'une amplitude supérieure à la tension de référence mesurée (101) ; et
l'au moins un signal d'impulsion de seconde direction (103) étant d'une amplitude inférieure à la tension de référence mesurée (101) ;
dans l'étape c), l'unité de calcul (302) utilisant une transformation conforme pour tourner les signaux mesurés (10) d'un angle prédéterminé, puis effectuant le calcul de débit ;
dans l'étape d), l'unité de calcul (302) définissant le signal de référence (104) comme signal de tension présent, et définissant qu'une valeur de crête de signal de tension présent est un maximum du signal de tension présent ou un minimum du signal de tension présent ;
dans l'étape e), l'unité de calcul (302) définissant le premier groupe de signaux (107) comme signal de tension de y temps antérieur, et définissant le y comme étant un nombre entier positif supérieur à zéro ; et
après l'étape i), le calcul de débit comprenant en outre :
i1) définir une valeur p comme valeur de tension prédéterminée par l'unité de calcul (302) ; et
i2) calculer, par l'unité de calcul (302) : un signal de débit présent = {(la valeur de crête de signal de tension présent - une valeur moyenne de la valeur p du signal de tension de y temps antérieur) + (la valeur de crête de signal de tension présent - la valeur p du signal de tension présent)}/2.

2. Schéma de calcul de débit selon la revendication 1, dans lequel une pluralité des signaux d'impulsion de première direction (102) et une pluralité des signaux d'impulsion de seconde direction (103) sont dans l'intervalle spécifique (206) ;
dans l'étape d), l'unité de calcul (302) définit l'un des signaux d'impulsion de première direction (102) comme étant le signal de référence (104) ;
dans l'étape e), l'unité de calcul (302) définit les signaux d'impulsion de seconde direction (103) avant le signal de référence (104) comme étant le premier groupe de signaux (107) ; et
dans l'étape f), l'unité de calcul (302) définit les signaux d'impulsion de seconde direction (103) après le signal de référence (104) comme étant le second groupe de signaux (108).

3. Schéma de calcul de débit selon la revendication 2, dans lequel une première quantité des signaux d'impulsion de seconde direction (103) du premier groupe de signaux (107) définis par l'unité de calcul (302) est égale à une seconde quantité des signaux d'impulsion de seconde direction (103) du second groupe de signaux (108) définis par l'unité de calcul (302).

4. Schéma de calcul de débit selon l'une quelconque des revendications précédentes, dans lequel, dans l'étape j), l'unité de calcul (302) utilise un produit de la valeur de pondération de résultat et d'un facteur d'étalonnage pour obtenir le résultat de mesure de débit du fluide (204), le facteur d'étalonnage étant compris entre 0,1 et 2,0.

5. Schéma de calcul de débit selon l'une quelconque des revendications précédentes, dans lequel :
dans l'étape c), l'unité de calcul (302) échantillonne les signaux mesurés (10) par un multiple r d'une fréquence d'alimentation d'une alimentation en courant alternatif ;
l'unité de calcul (302) détermine que le multiple r est un multiple entier positif supérieur à zéro ;
la fréquence d'alimentation de l'alimentation en courant alternatif est comprise entre 50 Hertz et 60 Hertz ;
dans l'étape c), l'unité de calcul (302) désigne que l'intervalle spécifique (206) comprend un multiple u d'une période d'alimentation de l'alimentation en courant alternatif ; et
l'unité de calcul (302) définit que le multiple u est un multiple entier positif supérieur à zéro.

6. Schéma de calcul de débit selon l'une quelconque des revendications précédentes, dans lequel l'unité de calcul (302) définit que l'intervalle spécifique (206) comprend un intervalle de détection de tube vide (112) de sorte que l'unité de mesure (304) envoie une pluralité de signaux de tension de détection de tube vide (111) pour détecter si le tube (202) est dans un état de tube vide ou non ; l'unité de calcul (302) définit que l'intervalle de détection de tube vide (112) est inférieur à un dixième de l'intervalle spécifique (206).

7. Schéma de calcul de débit selon la revendication 6, dans lequel :
dans l'étape g), l'unité de calcul (302) élimine un intervalle de détection de tube vide (112) dans lequel l'unité de mesure (304) envoie une pluralité de signaux de tension de détection de tube vide (111) de sorte que l'unité de calcul (302) obtient correctement la première valeur caractéristique du premier groupe de signaux (107) ;
dans l'étape h), l'unité de calcul (302) élimine l'intervalle de détection de tube vide (112) dans lequel l'unité de mesure (304) envoie les signaux de tension de détection de tube vide (111) de sorte que l'unité de calcul (302) obtient correctement la seconde valeur caractéristique du second groupe de signaux (108) ; et
après que l'unité de mesure (304) envoie les signaux de tension de détection de tube vide (111), les signaux de tension de détection de tube vide (111) influencent la tension de référence (101) des signaux mesurés (10), puis l'unité de calcul (302) élimine l'intervalle de détection de tube vide (112) dans lequel l'unité de mesure (304) envoie les signaux de tension de détection de tube vide (111), puis l'unité de calcul (302) réalise le calcul de débit.

8. Schéma de calcul de débit selon l'une quelconque des revendications précédentes, dans lequel la valeur de tension prédéterminée est une valeur de tension de phase spécifique prédéterminée ou une valeur de référence de tension de niveau spécifique ;
dans l'étape d), l'unité de calcul (302) définit la valeur de crête de signal de tension présent comme étant le maximum du signal de tension présent ;
dans l'étape i1), l'unité de calcul (302) définit la valeur p comme étant le minimum ; et
dans l'étape i2), l'unité de calcul (302) calcule :
un second signal de débit = {(le maximum du signal de tension présent - la valeur moyenne du minimum du signal de tension de y temps antérieur) + (le maximum du signal de tension présent - le minimum du signal de tension présent)}/2.
